# EUROPEAN PATENT SPECIFICATION

(11) **EP 0 713 477 B1**
(45) Date of publication and mention of the grant of the patent: **13.08.1997**
(21) Application number: 94918140.8
(22) Date of filing: 26.05.1994
(51) Int. Cl.: C01B 31/30, C01B 31/34

(54) **METHOD FOR MAKING SUBMICROMETER CARBIDES, SUBMICROMETER SOLID SOLLUTION CARBIDES, AND THE MATERIAL RESULTING THEREFROM**
VERFAHREN ZUR HERSTELLUNG VON CARBIDEN UND FESTEN LÖSUNGEN VON CARBIDEN IM SUBMICRON-BEREICH UND SUBSTANZEN DARAUS
PROCEDE DE PRODUCTION DE CARBURES SUBMICRONIQUES, DE CARBURES DE SOLUTIONS SOLIDES SUBMICRONIQUES, ET MATIERE PRODUITE A L'AIDE DE CE PROCEDE

(30) Priority: 09.08.1993 US 104511
(43) Date of publication of application: 29.05.1996
(73) Proprietor: THE DOW CHEMICAL COMPANY, Midland, Michigan 48640 (US)
(72) Inventor: DUNMEAD, Stephen, D., Midland, MI 48642 (US); MOORE, William, G., Midland, MI 48640 (US); WEIMER, Alan, W., Midland, MI 48642 (US); EISMAN, Glenn, A., Midland, MI 48640 (US); HENLEY, John, P., Midland, MI 48640 (US)
(74) Representative: Burford, Anthony Frederick
(86) International application number: PCT/US94/05963
(87) International publication number: WO 95/04703

(56) References cited:
- EP-A- 0 286 294
- WO-A-79/00089
- WO-A-90/08105
- GB-A- 1 488 362
- US-A- 3 812 239
- CHEMICAL ABSTRACTS, vol. 84, no. 20, 17 May 1976, Columbus, Ohio, US; abstract no. 137966y, AKIMOTO YUMI & AL. 'Micro-powder of metal carbides' page 147 ;column R ;
- DATABASE WPI Section Ch, Week 8648, Derwent Publications Ltd., London, GB; Class E37, AN 86-314855 & JP,A,61 232 212 (TOSHIBA TUNGALLOY KK) 16 October 1986
- DATABASE WPI Section Ch, Week 8448, Derwent Publications Ltd., London, GB; Class E31, AN 84-297730 & JP,A,59 184 717 (HITACHI METAL KK) 20 October 1984
- CHEMICAL ABSTRACTS, vol. 112, no. 10, 5 March 1990, Columbus, Ohio, US; abstract no. 80419n, ISKHAKOVA & AL. 'Structure and phase composition of tungsten carbide particles synthesized in a spark discharge'

## Description

This invention relates generally to methods for making metallic carbides, or solid solution carbides of two or more metals, and more particularly to rapid heating methods of making such carbides from one or more metallic oxide sources.

Ceramic materials have long been known for their good chemical stability and corrosion resistance. Of the ceramic materials, metallic carbide powders are used to form dies, cutting tools, wear resistant parts and electrical resistors, as well as being used as abrasives in liquids for polishing. Cemented tungsten carbides are useful in forming tools and abrasives for machining and grinding of rock, porcelain, glass and metals. Large grain size carbides are acceptable for many grinding applications. However, newer technology requires improvements in hardness, toughness or both that are produced only by submicrometer metallic carbides or submicrometer solid solution metallic carbides. Traditional production of submicrometer particles is capital intensive and incorporates long grinding or milling times.

Prior methods have generally carburized free metals in order to produce the metallic carbides. Frequently, naturally occurring metallic oxides, were ground to a very small size, chemically reduced to produce their corresponding free metals, and then carburized to produce the metallic carbides. However, a substantial drawback to using free metals is that it is difficult to make submicrometer free metal particles. Once such particles are made, they are pyrophoric and difficult to handle.

One solution presently offered to this drawback is the use of solid solution carbides, also known as mixed metal carbides, in place of the pure metallic carbides. A solid solution metallic carbide is a carbide that contains an alloy or mixture of two or more metals in a single carbide. Sources used in preparing a solid solution metallic carbide include combinations of individual metallic oxides and alloys of various metals in their oxidative form. Tungsten carbide (WC) is a much needed ceramic, but tungsten is a very expensive metal. By replacing part of the tungsten in WC, with a cheaper metal such as titanium, a less expensive, lower weight substitute with similar or even improved physical properties can be achieved. Titanium is a good substitute in WC because titanium dioxide (TiO₂) is less dense than tungsten trioxide (WO₃), a common starting material for WC, and costs about 1/6 as much as WO₃ at currently published prices.

Physical properties of ceramic articles that incorporate a metallic carbide or a solid solution carbide depend, to a great extent, upon the grain size of the carbide powder employed. In some applications, carbide powders with very fine grain sizes are quite useful. Such carbides, having mean particle sizes of no more than 1 micrometer (µm) and especially from 0.4 to 0.8 µm, are known as submicrometer or micrograin carbides. Submicrometer WC powders, for example, are especially useful for various purposes that include fabricating tools or parts for end milling and circuit board drilling applications, and use as reinforcing materials in ceramic metal composites. In addition, the submicrometer particle size carbides have been suggested as being useful in catalytic processes. Submicrometer carbide particles, preferably have a controlled morphology, a narrow size distribution, a well-defined stoichiometry, and relatively high purity.

A variety of processes for preparing metallic carbide powders are known. Many, especially those that produce solid solution carbides, yield particle sizes well above submicrometer size. The same hardness and resistance to wear for which metallic carbide powders are especially valued also makes their mechanical reduction to smaller sizes by conventional methods, such as grinding or milling, difficult and costly. It is therefore desirable to make carbide powders with a small initial size, rather than reduce the particle size after the powders have been formed.

One additional drawback related to known technology of making transition metal carbide powders in general, and WC in particular, is related to their use in the manufacture of cemented carbides, such as WC-cobalt (WC-Co). It is known that grain growth occurs when pure WC is liquid phase sintered with Co to make a cemented carbide. This becomes a problem when an application such as end milling or circuit board drilling requires a very small particle size in the final densified part. One solution to this problem is to use a second carbide phase, such as vanadium carbide (VC), titanium carbide (TiC), trichromium dicarbide (Cr₃C₂) and tantalum carbide (TaC), that acts as a grain growth inhibitor during liquid phase sintering. As the particle size of a primary carbide, such as WC, is very small, however, it is extremely difficult to get an intimate and homogeneous distribution of the second (or grain growth inhibiting) carbide phase(s). It would therefore be very desirable to provide a method by which a novel ultrafine carbide material with an intimate distribution of at least one grain growth inhibiting carbide phase could be produced. It would be even more desirable if the grain growth inhibiting carbide phase(s) could be made in situ during synthesis of the material and distribution of said grain growth inhibiting carbide phase(s) was on a size scale less than or equal to the primary carbide phase. This desirable distribution would include, but not be limited to, atomic scale distribution in the form of a solid solution.

The invention provides an economical, rapid and efficient method for making submicrometer metallic carbide or a submicrometer solid solution metallic carbide. The method comprises: rapidly carbothermally reducing a reactive particulate mixture of (a) at least one metallic oxide selected from oxides of the Group IVB (Ti, Zr, Hf), Group VB (V, Nb, Ta) and Group VIB (Cr, Mo, W) transition metals and (b) a carbon source, by heating the mixture at a rate within a range of from 100 K/sec to 100,000,000 K/sec in a substantially non-oxidizing atmosphere to an elevated temperature that makes carbothermal reduction of the reactive particulate mixture thermodynamically favorable; and holding the particulate mixture at the elevated temperature for a residence time sufficient to substantially convert the mixture into at least one product selected from (i) one or more metallic carbides, (ii) one or more metallic carbide precursors, (iii) one or more solid solution carbides, and (iv) one or more solid solution metallic carbide precursors. A temperature of from 1500 K to 2600 K is quite suitable (thermodynamically favorable) for synthesis of WC.

It is especially useful to rapidly cool the resulting product as quickly as it was heated to control metallic carbide powder morphology and particle size. In addition, some high purity metallic carbide products may be produced by a two-step process. In step one, the metallic oxide undergoes carbothermal reduction by very rapid heating to form a carbide precursor. In step two, additional carbon is admixed with the precursor to form a mixture which then undergoes a second heat treatment (generally in the presence of hydrogen) at a finishing temperature for a time sufficient to convert the precursor into a finished product such as a substantially pure carbide. The two-step process is not needed in all cases, but may be used when necessary.

There are two preferred methods for rapidly heating the particulate mixture of metallic oxide(s) and carbon. In one method, also known as the "drop" method, the particulate mixture is dropped into an already heated crucible that can heat the particulate mixture at a rate within a range of from 100 K per second to 10,000 K per second. In a second method, also known as the "entrainment method", the particulate mixture is entrained in a non-oxidizing atmosphere into a tubular reaction furnace maintained at the reaction temperature. The heating rate in the second method is within a range of from 10,000 K per second to 100,000,000 K per second.

Heating rate determination is discussed by A. W. Weimer et al. in "Kinetics of Carbothermal Reduction Synthesis of Beta Silicon Carbide", AIChE Journal, Vol. 39, No. 3 (March 1993) at pages 493-503. It is believed that heating rates approach 100,000,000 K per second with increasingly small reactant mixture particle sizes. Cooling desirably occurs at the same rate.

In the entrainment method, the mixture has an average residence time in the vertical reaction tube furnace within a range of from 0.1 second to 1 minute, preferably 0.1 to 30 seconds, especially 0.2 to 10 seconds. In the drop method, the heating rate is slower than in the entrainment method. Typical average residence times in the drop method are on the order of minutes to hours, rather than seconds, as in the entrainment method. Although these two particular heating methods have been tested and proven, any rapid heating method may be used to produce suitable submicrometer metallic carbides and submicrometer solid solution metallic carbides so long as the rapidity of the heating is maintained.

When practicing the two-step process, one can readily use the entrainment method in step one and the drop method in step two. A preferred alternative to the drop method for step two is to use a rotary furnace to provide sufficient heating and residence time to produce the substantially pure carbide.

Furthermore, the present invention also includes submicrometer solid solution metallic carbides selected from tungsten-molybdenum carbide, tungsten-titanium carbide, molybdenum-tantalum carbide, titanium-tantalum carbide, tungsten-titanium-tantalum carbide, hafnium-tantalum carbide, titanium-hafnium carbide, tantalum-tungsten carbide and titanium-tantalum-hafnium carbide. From a cost perspective, it may be desirable to substitute chromium for a portion of a metal in these solid solution metallic carbides.

The invention is directed to methods for preparing submicrometer metallic carbides or submicrometer solid solution metallic carbides. The production of monometallic carbides is discussed first. Reactant powder mixtures may generally be prepared by mixing and milling metal oxides and carbon black, and thereafter passing it through a coarse 8 mesh (U.S. Series or 2.36 millimeter (mm) opening) screen to remove the milling media. Aliquots of these mixtures are converted to metal carbides by the entrainment method, the drop method or, if desired, a combination of the two methods. The drop method involves the use of an induction furnace wherein a hot zone is brought to the desired reaction temperature, as described further hereinbelow, and allowed to equilibrate for 30 minutes under a flowing nonoxidizing gaseous atmosphere such as that provided by argon. Aliquots of a reactant powder mixture are dropped into a graphite crucible in the hot zone. The extent of the reaction is monitored by measuring the reactant byproduct carbon monoxide (CO) level in the crucible as a function of time. When the CO level decreases back to its baseline value, the reaction is assumed to be complete.

The rates of heating in the drop method have been determined to be within a range of from 100 K per second to 10,000 K per second. The aliquot is, following conversion to the carbide, cooled as rapidly as possible back to a temperature sufficient to minimize particle agglomeration and grain growth. Cooling back to room temperature clearly satisfies this requirement. The drop method is used as a predictor for anticipated results in the entrainment method.

The entrainment method involves the use of a tubular graphite reaction furnace like that disclosed in US-A-5,110,565 at column 6, line 52 through column 8, line 61. The reaction furnace is described in more detail in section II below. The reactant powder mixtures are placed into a feed hopper, which allows flowing nonoxidizing gas, such as argon, to entrain the powdered mixture, and deliver it to the furnace's reaction chamber as a dust cloud. The powder or particulate mixture is immediately heated in the reaction chamber at rates within a range of from 10,000 to 100,000,000 K per second, while the average residence time of powder in the furnace is on the order of seconds. As for exiting the hot zone of the reaction chamber, the flowing gas carries the powder into a water cooled stainless steel jacket which rapidly cools reacted powder below 283 K (10°C). The entrainment method is the preferred method, as it has been shown to produce smaller size particulates than the drop method.

### IA. Preparation of A Metallic Carbide Material

The metallic carbides of the invention are prepared by the rapid carbothermal reduction of a reactive particulate mixture of a metal oxide source and a carbon source. The reactive mixture is preferably prepared by milling a solid source of carbon with the metal oxide. When using the two-step method, the amount of carbon should be substoichiometric in step one so the carbon content can be adjusted during step two. If, on the other hand, the metallic carbide can be made in a single step rapid carbothermal process, then the amount of carbon should be close to stoichiometric. Milling of the reaction particulate mixture to a desired particulate size may be accomplished with any one of a number of conventional milling apparatuses. Illustrative apparatuses include jet mills and ball mills, the latter containing a suitable milling media such as WC-Co milling media. Other physical methods for mixing the carbon and metal oxide sources, and for reducing the size of the particulates in the mixture, may also be used.

The source of carbon is preferably a pure particulate carbon material such as carbon black, more preferably, in the form of acetylene black. A particularly preferred acetylene carbon black is commercially available from Chevron Chemical under the trade designation "SHAWINIGAN" (hereinafter referred to as "Chevron acetylene black"). Other solid sources should also be suitable. In addition, other sources of carbon such as organic polymers, carbohydrates and hydrocarbons may be used in place of all or part of a particulate carbon material.

If WC is the desired metallic carbide, the source of tungsten oxide is preferably particulate WO₃ of uniform particle size, desirably with a diameter of no more than 25 µm. A preferred particulate WO₃ of this size is sold by GTE Products Corporation under the trade name "TO-3". Materials such as metatungstic acid, ammonium paratungstate or other tungsten oxides can be used in place of WO₃, while other carbonaceous solids can be used in place of the carbon black.

The heating rate for taking the reactant mixture from room temperature up to the reaction temperature is preferably within a range of from 100 to 10,000 K per second for the drop method, and optimally within a range of from 10,000 to 100,000,000 K per second for the entrainment method. The reaction temperature must be high enough such that the reaction is thermodynamically favorable. One way of expressing this is to say that the Gibbs free energy change for the reaction must be negative. In other words, the free energy for formation of reaction products must be less than the free energy of formation of components of the reactant mixture. It must also be less than the melting point of any intended reaction product(s). For WC, a reaction temperature of at least 1673 K (1400°C) is considered beneficial, while temperatures of 1823 K (1550°C) to 2673 K (2400°C) are preferred. When using the entrainment method, a reaction temperature of 1873 to 2423 K (1600-2150°C) is satisfactory. Approximate temperatures at which the free energy of formation of reaction products is less than free energy of formation of components of the reactant mixture needed to form the reaction products are as follows: WC, 950 K (677°C); titanium carbide (TiC), 1555 K (1282°C) ; tantalum carbide (TaC), 1381 K (1108°C) ; vanadium carbide (VC), 932 K (659°C) ; hafnium carbide (HfC), 1934 K (1661°C) ; niobium carbide (NbC), 1228 K (955°C); zirconium carbide (ZrC), 1930 K (1657°C); dimolybdenum carbide (Mo₂C), 742 K (469°C) ; and trichromium dicarbide (Cr₃C₂), 1383 K (1110°C).

The residence time of a reactive mixture at reaction temperature depends in part upon the heating rate and reaction temperature, but must be high enough to reduce at least a major portion of the metallic oxide from the reactant mixture. The residence time is preferably within a range of from 0.1 second to 1/2 hour, depending upon the heating method, heating rate, reaction temperature, and the ultimate particle size desired. In the drop method, typical preferred residence times are from 5 minutes to 2 hours for a reaction temperature of 1773 K (1500°C) with a heating rate of 100 to 10,000 K per second. In the entrainment method, a residence time of from 0.2 to 10 seconds for a reaction temperature of 1823 K (1550°C) or above with a heating rate of 10,000 to 100,000,000 K per second is preferred. At the higher heating rate, residence times substantially greater than 10 seconds may undesirably produce sintered aggregates rather than particulate product. Any selected combination of reaction temperature, residence time and heating rate should, however, be adequate to convert the reactive particulate mixture of carbon and metal oxide into a product composed mainly of metal carbide.

Three factors, reaction temperature, residence time and heating rate, also control the size of product particles. They do so by affecting both nucleation rate for forming metal carbide particles and growth rate of these particles once formed. If the particles are roughly spherical in shape and the conversion of starting material to product occurs at a relatively constant volume rate, the growth rate of the particles is proportional to the cube root of the residence time. In order to minimize the particle size of the resulting metal carbide powder, the reaction temperature, heating rate and residence time must be selected to yield a particle nucleation rate which is higher than, preferably significantly higher than, the particle growth rate.

### IB. Preparation Of Solid Solution Carbides

Solid solution metallic carbides of the invention can be prepared by the direct rapid carbothermal reduction of a reactive particulate mixture, in a manner very similar to the method disclosed above for preparing the metal carbide. For preparing solid solution metallic carbides, however, the reactive particulate mixture is a mixture of a carbon source and at least one source of oxides of at least two transition metals selected from tungsten, titanium, tantalum, molybdenum, zirconium, hafnium, vanadium, niobium, and chromium. , The method for producing solid solution carbides is conveniently carried out by substituting the metal oxide source(s) for the metal oxide source employed in the method described in section IA above. This substitution is carried out with separate oxide powders of the selected metals, although a single multimetallic alloy oxide containing two or more of the metals would also be useful, but not required.

The metal oxide source preferably contains simple oxides of the metals, such as WO₃, titanium dioxide (TiO₂) and tantalum pentoxide (Ta₂O₅). The oxides in the metal oxide source are preferably of uniform particle size. "TITANOX" (Velsicol Chemical Corporation) is a preferred source of TiO₂. "TITANOX" is a trademark for Velsicol's series of white pigments comprising TiO₂ in both anatase and rutile crystalline forms. Some "TITANOX" series pigments are extended with calcium sulfate, but these extended pigments are not preferred for use in the invention. A preferred source of Ta₂O₅ of less than 325 mesh (45 µm) size and greater than 99% purity is sold by Aldrich Chemical Company, Milwaukee, Wisconsin. Oxides of the other metals should be of comparable purity and particle size.

Once the reactive particulate mixture is prepared, the particles are then rapidly and preferably individually heated as described in section IA. Considerations for the appropriate heating rate, reaction temperature and residence time are generally the same as described above in IA, and need not be repeated. Of course, the combination of reaction temperature, residence time and heating rate should be chosen to yield a solid solution metallic carbide containing at least two transition metals selected from tungsten, titanium, tantalum, molybdenum, zirconium, hafnium, vanadium, niobium, and chromium. The solid solution carbide should have an average particle size of no more than 1.0 µm, preferably from 0.01 to 1.0 µm. The residence time should also be sufficient to yield a predominantly solid solution carbide product.

Reactant feed mixture stoichiometry should be adjusted according to whether a second carburization step is needed. In synthesizing WC, it is difficult to directly produce pure WC using the rapid carbothermal reduction technology. As a result, the carbon stoichiometry of the reactant feed mixture should be less than that theoretically needed to make WC (WO₃ + 4 C = WC + 3 CO). In comparison TiC can be made in a single step reaction and the carbon stoichiometry should be close to theoretical (TiO₂ + 3C = TiC + 2CO). Similarly, the synthesis of a titanium-tantalum carbide (Ti-TaC) solid solution can take place in a single step and the carbon stoichiometry should be very close to 3 moles of carbon for each mole of TiO₂ (TiO₂ + 3C = TiC + 2CO) and 7 moles of carbon for each mole of Ta₂O₅ (Ta₂O₅ + 7 C = 2 TaC + 5 CO). The exact details of stoichiometry depend somewhat upon synthesis conditions and can be readily determined without undue experimentation.

### II. Reactor For Forming Metallic Or Solid Solution Carbide

There are several ways to heat a particulate reactive mixture of metal oxide(s) and carbon. Most advantageously, on a mass production scale, the mixture can be entrained through a hot zone of a tubular reaction furnace maintained at the reaction temperature so that reactant mixture particles are separately and individually heated at the heating rate during their entry into the hot zone. On a bench scale, the hot zone can be maintained in a furnace, and the heating carried out by dropping convenient aliquots of the particulate mixture into a graphite crucible maintained within the hot zone of the furnace. The heating rate for particles dropped in this manner is typically within a range of from 100 to 10,000 K per second.

Preferably, however, the heating process is carried out in a tubular graphite reaction furnace or reactor like that disclosed in US-A-5,110,565.The tubular reaction furnace comprises four principal components of concern: a cooled reactant transport member; a reactor chamber fed by the transport member; a heating means for heating the reactor chamber; and a cooling chamber fed by the reactor chamber.

The transport member can resemble a conduit disposed within a preferably annular gas flow space that serves to transport the reactive particulate mixture into the reaction chamber. The transport member is maintained at a temperature below the melting temperature of the metal oxide source so as to prevent the reactive particulate mixture from coalescing either within, or near the exit of, the transport member. Such coalescing very probably defeats any gain achieved by milling the particulate mixture and yields a material that is either too large in particle size or not fully converted to a desired precursor or solid solution carbide. The temperature of the transport member should therefore be sufficient to allow substantially all of the reactive particulate mixture to enter the reactor chamber as discrete particles.

The reactive particulate mixture is suitably fed into the transport member by a powder feeding mechanism. The structure of the powder feeding mechanism is not particularly critical so long as it provides a metered or controlled flow of the reactive particulate mixture to the transport member. The feeding mechanism can be a single screw feeder, a twin screw feeder, a vibrator feeder, a rotary valve feeder, or some other feeder of conventional construction.

The reactor design and capacity determine maximum acceptable particulate feed rates. As an illustration, an acceptable feed rate for a reactor having a reaction zone volume of 2.16 cubic feet (ft³) (0.06 cubic meters (m³)) is within a range of from 0.02 to 0.5 kilograms per minute (kgm). Acceptable feed rates for reactors having different reaction zone volumes can be readily determined without undue experimentation.

A non-oxidizing atmosphere, such as gaseous argon, is fed into the transport member at a pressure and a flow rate sufficient to entrain the reactant particulate mixture and carry the particulate mixture into the reaction chamber. The flow rate thus determines residence time of the mixture within the reactor chamber. The non-oxidizing gas (argon or another inert gas, optionally in admixture with one or more of hydrogen and carbon monoxide and, if desired, a non-particulate solid source of carbon) is preferably supplied both in a major amount directly through the transport member, and in a minor amount indirectly into the reaction chamber via a gas flow space around the perimeter of the reactant transport member. If supplied by two different sources, the gas that flows through the gas flow space is desirably an inert gas such as argon. Again by way of illustration, these amounts are preferably at least 85 and 28 standard liters per minute (slm), respectively, for a reactor having a reaction zone volume of 2.16 ft³ (0.06 m³), but depend upon temperature and reactant feed rate. The gas flowing into the reactor chamber from the gas flow space acts to minimize or substantially eliminate contact of the reactant powder mixture with those reactor chamber surfaces near the junction with the exit of the transport member. Such contact is undesirable because these surfaces tend to be at temperatures which promote coalescence of the mixture. This can, in turn, lead to plugging of the reactor and termination of operation.

The entrained flow of reactive particulate mixture enters the reaction zone in a form approximating that of a well-dispersed dust cloud. The particles of the mixture are heated almost instantaneously by gas convective and conductive heat transfer, as well as by thermal radiation from the walls defining the heated reaction zone. For particles of a diameter less than 1000 µm, however, particle heating is dominated by gas/particle conduction/convection processes, rather than radiation. Internal particle conduction is extremely rapid compared to surface heating, so that the particles may be assumed to be isothermal with heating rates adequately described for the mass by the surface heating characteristics. It is on this basis that the preferred heating rate of 10,000 K or higher per second is calculated. The actual temperature within the reaction zone may be determined by optical pyrometry or other suitable means.

The flow of non-oxidizing gas that entrains the reactive particulate mixture and flows it into the reaction zone also carries resulting product out of the reaction zone. As noted above, the product is a precursor when the two step procedure is used or a metallic carbide or solid solution carbide when the single step procedure produces substantially complete conversion of the particulate reactive mixture into the desired product. The entrained dust cloud beneficially exits the reaction zone and almost immediately enters a cooling zone. The cooling zone quenches (rapidly cools) the mixed precursor below its reaction temperature. Cooling rates within the cooling zone beneficially approximate the heating rates within the reaction zone. The walls of the cooling zone cool the entrainment gas and rapidly remove any amount of heat retained by product particles. In the absence of rapid cooling, reaction within the particles when preparing precursors can continue for an extended time, thereby resulting in formation of undesirable agglomerates or larger grains in the product. Without cooling in the single step procedure, particle growth or agglomeration is also a significant problem. The actual cooling time experienced will vary depending upon factors such as particle size, physical configuration of the cooling zone, and exit gas flow rate.

In the preferred reactor described above, demarcation between the transport member and the reaction zone allows the preferred heating rate of 10,000 to 100,000,000 K per second to be achieved. This combination of high heating rate and short residence time at a high reaction temperature allows reaction of the particulate mixture to proceed as recited in Section IA and IB above. In other words, product particle nucleation rates is significantly higher than product particle growth rates. This favors production of particles in the form of submicrometer crystals.

The cooled particles are suitably collected and processed by conventional technology. The particles have a diameter that is beneficially greater than 0 µm but no more than 1.0 µm, desirably no more than 0.5 µm, preferably from 0.01 µm to no more than 0.3 µm, and more preferably from 0.05 to 0.2 µm.

### III. Step Two of a Two Step Procedure

Although the product described above may be one in which conversion is substantially complete, there may be an occasion in which very pure metallic carbide is desired. If so, the reaction is substantially repeated, frequently using a different apparatus, with an amount of additional, preferably solid, carbon. This amount is selected so that remaining oxygen, if any, in the product (now called the "precursor" for this second reaction) is carbothermally reduced, and substantially all metal present in the precursor is converted to its carbide. The amount of additional carbon is also selected to be adequate to achieve such carbothermal reduction upon heating with the precursor under movement in a non-oxidizing atmosphere. The original product and the additional carbon can be mixed by using any conventional mixing apparatus. Illustrative apparatuses include ribbon blenders, roller mills, vertical screw mixers, V-blenders, and fluidized zone mixers, such as that sold under the trade designation "FORBERG".

By way of illustration, when the precursor is a WC precursor, a tungsten-molybdenum carbide precursor, a tungsten-titanium carbide precursor or a tungsten-vanadium carbide precursor, heating or finishing is accomplished at a temperature of from 1473 to 1673 K (1200 to 1400°C). The temperature is desirably maintained for a time of from 15 to 180 minutes.

The amount of additional carbon is typically determined on an empirical basis. The amount depends upon experimental conditions and apparatus. This amount may be determined by skilled artisans without undue experimentation, in view of the present disclosure. In the two-step synthesis of WC under the conditions described herein, an amount comprising a sum of 0.67 stoichiometric with respect to the oxygen in the precursor, and stoichiometric with respect to W₂C and free metal in the precursor, is just adequate to fully convert the original product (precursor) to WC with low free carbon and total oxygen. The amount of additional solid carbon to be added usually ranges from to 1 to 5 percent by weight (wt%), based on precursor weight, typically from 2.15 to 2.75 wt%.

Heating the precursor and supplemental carbon under movement is helpful for successful conversion. Unexpectedly, and in direct contrast to treatment in a static bed, the resulting metal carbide powder is very uniform in composition and size. In the case of WC, the heating is beneficially carried out at a temperature of at least 1373 K (1100°C) and optimally at a temperature of 1523 K (1250°C), for a time period of 0.5 to 5 hours, depending upon the temperature and degree of movement during heating. Temperatures and reaction times for other metallic carbides or solid solution metallic carbides can be determined by skilled artisans without undue experimentation.

Movement of a mixture of the precursor and supplemental carbon can be carried out in a variety of ways, but most preferably is carried out by disposing the mixture in a rotary graphite crucible, and tumbling mixture components together by rotating the crucible while heating. A crucible that has a diameter of 20 centimeters and is rotated at 1 to 10 revolutions per minute (rpm) is useful for treating individual 500 gram (g) lots of the mixture. Other suitable apparatuses for mixing and heating the mixture include rotary calciners, fluidized beds and vibrating fluidized beds. Appropriate tumbling rates for other apparatuses or for different lot sizes can be determined without undue experimentation. Heating is carried out in an inert or non-oxidizing atmosphere, conveniently comprising argon, and preferably containing 95 mole percent argon and 5 mole percent hydrogen. Heating can be carried out in a number of ways such as by induction heating of the rotary graphite crucible.

When a solid solution is formed by direct substitution of one metal ion for another, such as Mo or Ti for W in WC, some lattice shrinkage will occur if the ion being substituted is smaller than the one it replaces and its concentration is sufficiently high. Lattice expansion will occur if the substituting ion is larger than the one it replaces. If Mo is substituted into WC, lattice contraction would be expected because an Mo ion is smaller than a W ion. As such, measurement of lattice parameters by high resolution x-ray diffraction (XRD) techniques is a valuable tool for studying solid solution materials. These lattice parameters can be measured by a-cell and c-cell parameters, in Angstroms (10⁻¹⁰ meters), to quantify the expansion or contraction of a lattice when a substitution takes place, thereby indicating the extent of solid solution.

The following examples illustrate the methods of the invention. Examples 1-4 illustrate the entrainment method, and show that particle sizes of from 0.05 to 0.1 µm in diameter can be achieved. The remaining Examples 5-37 use the drop method, and serve to predict success in the entrainment method. The drop method is a bench scale experimental method, while the entrainment method is a much larger scale method. The drop method tends to produce larger sized particles than the entrainment method. Particle compositions resulting from the drop method are similar to those produced by the entrainment method when identical starting materials are used. Consequently, any results that can be achieved using the drop method can be improved upon by using the entrainment method.

### EXAMPLE 1

A stock reactive particulate mixture of a WO₃ source and a carbon source useful for making a WC precursor was prepared by milling 1.35 kilograms (kg) of Chevron acetylene black and 7.45 kg of WO₃ (GTE, TO-3) in a polyurethane-lined 11.4 liter (1) mill with 0.48 centimeter (cm) diameter tungsten carbide-cobalt (WC-Co) milling media. Sufficient milling media was added to fill the mill to 66% of capacity (by volume). The mixture contained 15.34 parts by weight (pbw) carbon and 84.66 pbw WO₃. The mill ran for 2 hours at 50 rpm before it was emptied, cleaned and refilled, after which it ran for 2 more hours at the same speed. After the second milling, the powder was passed through a coarse (8 mesh, 2.36 mm) screen to remove the milling media from a milled powder. The milled powder, now a reactive particulate mixture, was a uniform dispersion of carbon black and WO₃ when observed through an optical microscope. The maximum size of the powder grains was 10 µm in diameter.

Sixty six (66) kgs of the reactive particulate were loaded into the feed hopper of a tubular graphite reaction furnace of the type described above and disclosed in US-A-5,110,565. The furnace tube was 3.35 meters (m) long and had a 15.2 centimeter (cm) inside diameter (ID). The feed hopper was connected to the cooled reactant transport member of the furnace by a twin screw loss-in-weight feeder. The reactant transport member had an ID of 1.3 cm and was maintained at a temperature of 283 K (10°C) by water flowing through a cooling jacket surrounding the reactant transport member. The feed hopper was purged with argon gas for 30 minutes after the reactive particulate mixture was loaded into it, while a hot zone within a reaction chamber of the furnace was brought to a temperature of 1823 K (1550°C) as measured by optical pyrometers viewing an outside wall of the reaction chamber. Argon gas flowed into the reactant transport member at a rate of 3 standard cubic feet per minute (scfm) (84.95 slm), while one scfm (28.3 slm) of argon gas flowed into the reaction chamber via the gas flow space around the perimeter of the reactant transport member.

The reactive particulate mixture was fed from the feed hopper into the cooled reactant transport member at a rate of 0.25 pounds per minute (0.11 kg per minute) by the twin screw feeder. The flowing argon gas entrained the mixture and delivered it to the reaction chamber as a dust cloud. The particulate mixture was immediately heated in the reaction chamber at a rate of 10,000 to 100,000,000 K per second. The average residence time of the reactive particulate mixture in the furnace was 3.9 seconds, forming a precursor product.

After exiting the hot zone of the reaction chamber, the flowing argon gas carried the precursor product into a cooling zone (chamber) having a water cooled stainless steel jacket where it was rapidly cooled to below 283 K (10°C). The product (a precursor in this example) was collected in a stainless steel drum. A gas turbine meter was employed downstream of the reaction chamber in order to measure the rate of gas flow through the reactor. The flow exiting the reactor was 1.02 scfm (28.9 slm) greater than the flow of gas entering the reaction chamber. The increased gas flow arose from carbon monoxide generated during the carbothermal reduction of the reactive particulate mixture.

An in-line sampling device located in the cooling zone collected a representative sample of the product formed in the reaction chamber. The resulting product, by XRD analysis, was composed of tungsten, ditungsten carbide (W₂C) and WC. The product contained approximately three wt% oxygen and 4.74 w-% total carbon. The average particle diameter of the product was observed by scanning electron microscopy (SEM) to be 0.1 µm.

In order to achieve pure WC, the precursor product was subjected to a second or finishing step. Five hundred grams (500 g) of the precursor product was milled with WC milling media for 1 hour before 13.58 g of the same carbon black so in the reactive particulate mixture was added and milling continued for an additional hour. This material was placed into a rotary graphite crucible furnace similar to that previously described and subjected to a carburization reaction at 1523 K (1250°C) for 1 hour in a 5% H₂ - 95% Ar atmosphere, both percentages being based on atmosphere volume. During carburization, the 20 cm diameter crucible was rotated at 6 rpm. High resolution XRD analysis of the product showed that it contained WC with no trace of W₂C detected. LECO combustion analysis of the final product measured a carbon content of 6.13 wt%. The average particle diameter of the WC, as determined by SEM, was between 0.1 and 0.2 µm.

### EXAMPLE 2

An 11.0 kg quantity of a reactive particulate mixture was prepared and reacted as in Example 1, but at a temperature of 2423 K and a reduced average residence time of 2.9 seconds. The downstream gas turbine meter measured an increase in exit gas flow of 0.97 scfm (27.5 slm) over the inflowing gas. The product, by XRD analysis, was composed of tungsten, W₂C and WC. In comparison to the product of Example 1, this product had a higher concentration of W₂C, a lower concentration of tungsten, and roughly the same amount of WC. Combustion analysis showed that the product of this Example contained 0.68 wt% oxygen and 3.88 wt% total carbon. The product had an average particle diameter (SEM) of 0.05 µm.

The product was finished as in Example 1, but with a lower amount of carbon (13.43 g). The finished product by XRD analysis, was composed of WC with no detectable W₂C. LECO combustion analysis of the finished product showed a carbon content of 6.18 wt%. The average (SEM) WC particle diameter was 0.1 µm.

### EXAMPLE 3

A 2.0 kg mixture of WO₃, TiO₂ (TITANOX), and carbon (C) black was prepared by milling 83.8 pbw WO₃, 15.5 pbw C, and 0.7 pbw TiO₂ for 4 hours with WC-Co media as in Example 1. The WO₃ and carbon black were the same as in Example 1. This mixture was designed to provide a finished W-Ti carbide solid solution product with a theoretical content of 1 wt% TiC and 99 wt% WC.

Using the apparatus and procedure of Example 1, a total of four kg of the mixture was converted to an unfinished product. The average residence time in the furnace was 3.9 seconds. The downstream gas turbine meter measured an increase in gas flow of 25.2 slm (0.89 scfm). The oxygen and total carbon contents of the materials, as measured by LECO combustion analysis, were 2.7 wt% and 4.85 wt%, respectively. XRD analysis showed that the unfinished product was composed of tungsten, W₂C, and WC. The average particle diameter (SEM) was 0.1 µm.

An amount (500 g) of the unfinished product was milled with WC-Co milling media for 1 hour after which 12.7 g of C were added and milling continued for an additional hour. This material was then finished as in Example 1. High resolution XRD analysis of the product showed that it was composed of WC with no trace of W₂C or TiC. X-ray fluorescence (XRF) showed that the finished product contained 760 ppm of Ti. Since the amount of Ti in the finished product was so small, no significant lattice parameter change could be detected. It is believed, however, that the Ti was in the form of a W-Ti carbide solid solution. As anticipated, transmission electron microscopy (TEM) failed to reveal any particles of TiC. LECO combustion analysis of the finished product showed a C content of 6.09 wt%. The product had an average particle diameter (SEM) of 0.1 µm.

### EXAMPLE 4

A mixture (in 2 kg lots) of WO₃, MoO₃ (Aldrich Cat #26785-6), and C was prepared by milling 78.2 pbw WO₃, 5.9 pbw MoO₃, and 15.9 pbw C for 4 hours with WC-Co milling media as in Example 1. The WO₃ and C were the same as used in Example 1. This mixture was designed to provide a finished product with a theoretical content of 6 wt% Mo₂C and 94 wt% WC. Ten kg of the mixture were reacted as in Example 1 to prepare an unfinished product that generated an increase in gas flow of 26.3 slm (0.93 scfm). The unfinished product had an average particle diameter (SEM) of less than 0.1 µm and oxygen and total carbon contents (LECO combustion analysis) of 4.07 wt% and 5.32 wt%, respectively.

The unfinished product was converted to a final product as in Example 1 using 38.3 g of C per 1000 g of unfinished product. The final product had an average particle diameter (SEM) of 0.2 µm and oxygen and total carbon contents (LECO combustion analysis) of 0.36 wt% and 5.58 wt%, respectively. High resolution XRD analysis of the final product showed that it was composed primarily of a W-Mo carbide solid solution with a WC crystal structure. The a-cell parameter of the final product was 2.9062 ± 0.0001 Angstroms (Å) (2.9062 x 10⁻¹⁰ m) while the c-cell parameter was 2.8367 ± 0.0004 Å (2.837 x 10⁻¹⁰ m). These parameters compared with an a-cell parameter of 2.9055 ± 0.0002 Å and a c-cell parameter of 2.8396 ± 0.0004 Å for the pure WC of Example 1. These data demonstrated that the tungsten-molybdenum carbide lattice had contracted as compared with pure WC, but only in one dimension.

### EXAMPLE 5

A 50 g mixture of WO₃, TiO₂, and C was prepared by milling 63.50 pbw WO₃, 17.23 pbw TiO₂, and 19.27 pbw C for 1 hour with WC-Co milling media. The WO₃, TiO₂ and C were the same as used in Example 3. This particular mixture corresponded to the following equation: 75 wt% (WO₃ + 3.5C) + 25 wt% (TiO₂ +3C). The milling was done in a polyurethane lined 0.95 1 mill filled to 66% (by volume) of capacity with 0.48 cm diameter milling media. The speed of the mill was set at 20 rpm. After milling, the powder was separated from the milling media as in Example 1.

Three 3 g aliquots of this mixture were dropped into a graphite crucible that was maintained at a temperature of 1773 K (1500°C) in an argon (Ar) atmosphere. By monitoring CO evolution, the reaction was believed to be essentially complete in 3 minutes for each aliquot. The CO level was allowed to reach a baseline value (no further CO evolution) before the next aliquot was dropped. The heating rate for each aliquot was estimated to be within a range of 100 to 1000 K/sec. The contents of the crucible were then milled with an additional 4 wt% C and given a post reaction heat treatment at 1523 K (1250°C) for 3 hours in Ar. XRD analysis of the heat treated product showed that it contained a high concentration of W-Ti carbide solid solution (70 wt%), a lesser amount of WC (25 wt%), and a trace of W₂C (5 wt%). The solid solution had a TiC/NaCl cubic crystal structure with a lattice parameter of 4.30868 +/- 0.00892 Å (4.309 x 10⁻¹⁰ m). Pure TiC had a theoretical lattice parameter of 4.3274 Å (4.327 x 10⁻¹⁰ m). SEM analysis showed that the average product particle diameter was 0.2 µm.

### EXAMPLE 6

A 100 g mixture of 16.93 pbw WO₃, 55.15 pbw TiO₂, and 27.92 pbw C was prepared using the same raw materials procedure as in Example 5. The mixture corresponded to the following equation: 20 wt% (WO₃ + 3.5C) + 80 wt% (TiO₂ + 3C). Three 4 g aliquots of the mixture were dropped into heated graphite crucible as in Example 5 and reacted. The reaction was essentially complete, as determined by CO evolution, in 2.5 minutes for each aliquot. XRD analysis of the product (without any finishing reaction) showed that it contained a high concentration of W-Ti carbide solid solution (87 wt%), a lesser amount of WC (10 wt%), and small traces of W and W₂C. The average product particle diameter (SEM) was 0.2 µm.

### EXAMPLE 7

Duplication of Example 6, save for increasing the crucible temperature to 2023 K, resulted in an essentially complete (by CO evolution) reaction in 2 minutes. XRD analysis of the product (without any finishing reaction) showed that it contained 95 wt% W-Ti carbide solid solution and 5 wt% WC. There were no discernible traces of W and W₂C. The average product particle diameter (SEM) was 0.2 µm.

### EXAMPLE 8

The procedures of Example 6 were duplicated for a 100 g mixture of 42.33 pbw WO₃, 34.47 pbw TiO₂, and 23.20 pbw C. The mixture corresponded to the following equation: 50 wt% (WO₃ + 3.5C) + 50 wt% (TiO₂ +3C). As in Example 6, the reaction was essentially complete in 2.5 minutes. XRD analysis of the product (without any post reaction) showed that it contained 61 wt% W-Ti carbide solid solution, 18 wt% WC, 15 wt% W₂C, and 6 wt% W. High resolution TEM showed an average product particle diameter of 0.15 µm.

### EXAMPLE 9

When Example 8 was duplicated, except for increasing the crucible temperature to 2023 K, the reaction was essentially complete in 2 minutes. XRD analysis of the product (without any post reaction) showed that it contained 90 wt% W-Ti carbide solid solution, 4 wt% WC, 4 wt% W₂C, and 2 wt% W. The average product particle diameter (high resolution TEM) was 0.2 µm.

### EXAMPLE 10

Using the procedure of Example 5, a 100 g mixture of 42.33 pbw WO₃, 42.01 pbw Ta₂O₅ (Aldrich 99% pure, -325 mesh (45 µm)), and 15.66 pbw C was prepared and reacted. The mixture corresponded to the following equation: 50 wt % (WO₃ + 3.5C) + 3.5C) + 50 wt% (Ta₂O₅ + 7C). The reaction was essentially complete in 3 minutes. XRD analysis of the product (without any finishing reaction) showed that it contained 40 wt% W-Ta carbide solid solution, 40 wt% W₂C, and 20 wt% WC. The average product diameter (SEM) was 0.2 µm.

### EXAMPLE 11

When Example 10 was duplicated save for increasing the crucible temperature to 2023 K, the reaction was essentially complete in 2.5 minutes. XRD analysis of the product (without any finishing reaction) showed that it contained 65 wt% W-Ta carbide solid solution, 30 wt% W₂C, and 5 wt% WC. The average product diameter (SEM) was 0.2 µm.

### EXAMPLE 12

Example 10 was duplicated for a 100 g mixture of 34.47 pbw TiO₂, 42.01 pbw Ta₂O₅, and 23.52 pbw C. The mixture corresponded to the following equation: 50 wt% (TiO₂ + 3C) + 50 wt% (Ta₂O₅ + 7C). The reaction was essentially complete (by CO evolution) in 4.5 minutes. XRD analysis of the product (without any post reaction) showed that it contained 100 wt% of the Ti-Ta carbide solid solution, with no other phases detected. The average product diameter (SEM) was 0.2 µm.

### EXAMPLE 13

When Example 12 was duplicated save for increasing the crucible temperature to 2023 K, the reaction was essentially complete in 2 minutes. The product was essentially identical to that produced in Example 12.

### EXAMPLE 14

Example 10 was duplicated with a 100 g mixture of 42.23 pbw WO₃, 21.01 pbw Ta₂O₅, 17.24 TiO₂ and 19.42 pbw C. This particular mixture corresponded to the following equation: 50 wt% (WO₃ + 3.5C) + 25 wt% (Ta₂O₅ + 7C) + 25 wt-% (TiO₂ + 3C). The reaction was essentially complete in 3 minutes. XRD analysis of the product (without any finishing reaction) showed that it contained 75 wt% W-Ti-Ta carbide solid solution, 15 wt% W₂C, and 10 wt% W. The average product diameter (SEM) was 0.2 µm.

### EXAMPLE 15

Duplication of Example 14 except for increasing the crucible temperature to 2023 K provided a complete reaction in 2.5 minutes. XRD analysis of the product (without any finishing reaction) showed that it contained 90 wt% W-Ti-Ta carbide solid solution, 5 wt% W₂C, and 5 wt% W. The average product diameter (SEM) was 0.2 µm.

### EXAMPLES 16-37

Group IVB (Ti, Zr, Hf), Group V B (V, Nb, Ta), and Group VIB (Cr, Mo, W) metal oxides were converted to their corresponding metallic carbides or solid solution metallic carbides by repeating the procedure of Example 5, except for reducing the milling time to 30 minutes, for 100 g quantities of reactant mixtures. Reactants that were used in preparing the mixtures are shown in Table 1. Table 2 shows reactant mixture composition and crucible temperature. Table 3 shows the reaction time, product phase chemistry and particle size in µm.

**TABLE 1**

| Raw Materials Used in Examples 16 Through 37 | | | |
|---|---|---|---|
| Material | Source | Purity (%) | Grade |
| C | Chevron | n.d. | Shawinigan |
| MoO₃ | Aldrich | 99.5 | 26,785-6 |
| TiO₂ | Aldrich | 99+ | 24,857-6 |
| Ta₂O₅ | Aldrich | 99 | 30,351-8 |
| HfO₂ | Aldrich | 98 | 20,211-8 |
| ZrO₂ | Aesar | 99+ | 11395 |
| WO₃ | GTE | 99.9 | TO-3 |

The data presented in Table 3 showed that satisfactory products could be made using the drop method. Based upon a comparison of Examples 1 and 16, substantially similar results can be obtained by replicating the drop method experiments using the entrainment method. The entrainment method does, however, typically yield a product with a much smaller particle size than that produced by the drop method. By way of illustration, Example 1 yielded an average particle diameter of between 0.1 and 0.2 µm at 1823 K (1550°C) and Example 2 resulted in an average particle diameter of 0.1 µm at 2423 K (2150°C) whereas Example 16 yielded an average particle diameter of 0.5 µm at 2023 K (1750°C). Similar results are expected for the other products when they are made by the entrainment method.

**TABLE 2**

| Reactant Feed Mixture and Reaction Temperatures Used for Examples 16 Through 37 | | |
|---|---|---|
| Example | Reactant Mixture (wt%) | Temperature (°C) |
| 16 | WO₃ +4C | 1750 |
| 17 | WO₃ +4C | 1950 |
| 18 | TiO₂ +3C | 1550 |
| 19 | TiO₂ +3C | 1750 |
| 20 | TiO₂ +3C | 1950 |
| 21 | ZrO₂ +3C | 1950 |
| 22 | Ta₂O₅ +7C | 1750 |
| 23 | Ta₂O₅ +7C | 1950 |
| 24 | 2MoO₃ +7C | 1950 |
| 25 | 50%(TiO₂ +3C) +50%(HfO₂ +3C) | 1550 |
| 26 | 50%(TiO₂ +3C) +50%(HfO₂ +3C) | 1750 |
| 27 | 50%(TiO₂ +3C) +50%(HfO₂ +3C) | 1950 |
| 28 | 50%(2MoO₃ +7C) +50%(Ta₂O₅ +7C) | 1550 |
| 29 | 50%(2MoO₃ +7C) +50%(Ta₂O₅ +7C) | 1750 |
| 30 | 50%(2MoO₃ +7C) +50%(Ta₂O₅ +7C) | 1950 |
| 31 | 50%(Ta₂O₅ +7C) +50%(WO₃ +4C) | 1750 |
| 32 | 50%(Ta₂O₅ +7C) +50%(WO₃ +4C) | 1950 |
| 33 | 50%(HfO₂ +3C) +50%(Ta₂O₅ +7C) | 1550 |
| 34 | 50%(HfO₂ +3C) +50%(Ta₂O₅ +7C) | 1750 |
| 35 | 50%(HfO₂ +3C) +50%(Ta₂O₅ +7C) | 1950 |
| 36 | 33.3%(TiO₂ +3C) +33.3%(HfO₂ +3C) +33.3%(Ta₂O₅ +7C) | 1750 |
| 37 | 33.3%(TiO₂ +3C) +33.3%(HfO₂ +3C) +33.3%(Ta₂O₅ +7C) | 1950 |

**TABLE 3**

| Reaction Time, Phase Chemistry, and Particle Size Results for Examples 16 Through 37 | | | |
|---|---|---|---|
| Example | Reaction Time (minutes) | Phases Present (M=major, m=minor, t=trace) | Particle Size (µm) |
| 16 | 2.75 | W₂C=M,WC=m,W=m | 0.5 |
| 17 | 2.25 | W₂C=M,WC=m,W=m | 0.5 |
| 18 | 2.50 | TiC=M | 0.4 |
| 19 | 2.00 | TiC=M | 0.4 |
| 20 | 2.75 | TiC=M | 0.4 |
| 21 | 2.75 | ZrC=M | 0.4 |
| 22 | 3.00 | TaC=M, Ta₂C=t | 0.3 |
| 23 | 2.50 | TaC=M | 0.3 |
| 24 | 3.00 | Mo₂C=M | 0.4 |
| 25 | 2.50 | Ti(Hf)C=M,Hf(Ti)C=M | 0.3 |
| 26 | 2.50 | Ti(Hf)C=M,Hf(Ti)C=M | 0.3 |
| 27 | 2.00 | Hf (Ti)C=M,Ti(Hf)C=M | 0.4 |
| 28 | 3.00 | Ta(Mo)C=M,Mo₂C=t | 0.5 |
| 29 | 3.00 | Ta(Mo)C=M,Mo₂C=t | 0.5 |
| 30 | 2.75 | Ta(Mo)C=M,Mo₂C=t | 0.4 |
| 31 | 3.00 | WC=M,Ta(W)C=M,W₂C=m | 0.5 |
| 32 | 2.75 | Ta(W)C=M,WC=M | 0.4 |
| 33 | 3.25 | TaC=M,HfC=M | 0.4 |
| 34 | 3.00 | Ta(Hf)C=M,Hf(Ta)C=M | 0.4 |
| 35 | 3.25 | Ta(Hf)C=M,Hf(Ta)C=M | 0.5 |
| 36 | 2.50 | Ti(Ta,Hf)C=M,Hf(Ti,Ta)C=M | 0.4 |
| 37 | 2.50 | Ti(Ta,Hf)C=M,Hf(Ti,Ta)C=m | 0.3 |

## Claims

1. A method for making a submicrometer particulate carbide, comprising:
rapidly carbothermally reducing a reactive particulate mixture of (a) at least one metallic oxide selected from oxides of the Group IVB (Ti, Zr, Hf), Group VB (V, Nb, Ta) and Group VIB (Cr, Mo, W) transition metals and (b) a carbon source,
by heating the mixture at a rate within a range of from 100 K/sec to 100,000,000 K/sec in a substantially non-oxidizing atmosphere to an elevated temperature that makes carbothermal reduction of the reactive particulate mixture thermodynamically favorable; and
holding the particulate mixture at the elevated temperature for a residence time sufficient to substantially convert the mixture into at least one product selected from (i) one or more metallic carbides, (ii) one or more metallic carbide precursors, (iii) one or more solid solution carbides, and (iv) one of more solid solution metallic carbide precursors.

2. A method as claimed in Claim 1, wherein the product is a tungsten carbide precursor and the elevated temperature is within a range of from 1673 K (1400°C) to 2673 K (2400°C).

3. A method as claimed in Claim 1 or Claim 2, wherein the residence time is from 0.1 second to 30 minutes.

4. A method as claimed in Claim 1, wherein said residence time is from 0.1 second to 30 seconds.

5. A method as claimed in any one of Claims 1 to 3, wherein the heating rate range is from 100 to 10,000 K/second.

6. A method as claimed in any one of Claims 1 to 4, wherein the heating rate range is from 10,000 to 100,000,000 K/second.

7. A method as claimed in any one of the preceding claims, wherein the product has a size of from 0.01 to 0.2 micrometer.

8. A method as claimed in any one of the preceding claims, wherein said product is at least one metallic carbide selected from titanium carbide, zirconium carbide, hafnium carbide, tantalum carbide, and molybdenum carbide,

9. A method as claimed in any one of Claims 1 to 6, wherein the product is at least one solid solution carbide selected from tungsten-titanium carbide, molybdenum-tantalum carbide, titanium-tantalum carbide, tungsten-titanium-tantalum carbide, hafnium-tantalum carbide, titanium-hafnium carbide, tantalum-tungsten carbide, titanium-tantalum-hafnium carbide, tungsten-molybdenum carbide, and tungsten-vanadium carbide.

10. A method as claimed in any one of Claims 1 to 5, wherein the product is a precursor selected from (ii) or (iv) and the process further comprises a finishing step in which an amount of carbon sufficient to convert the precursor to a finished product is admixed with the precursor to form a mixture that is the heated to a finishing temperature and maintained at that temperature for a period of time sufficient to convert the precursor to a finished product.

11. A method as claimed in Claim 10, wherein the precursor is a tungsten carbide precursor, tungsten-molybdenum carbide precursor, a tungsten-titanium carbide precursor or a tungsten-vanadium carbide precursor, the finishing temperature is from 1473 to 1673 K (1200 to 1400°C) and the time at the finishing temperature is from 15 to 180 minutes.

12. A method as claimed in Claim 10 or Claim 11, wherein the mixture is subjected to a mixing action during finishing.

## Revendications

1. Procédé pour produire un carbure particulaire submicronique, consistant:
à réduire carbothermiquement et rapidement un mélange particulaire réactif de (a) au moins un oxyde métallique choisi parmi les oxydes des métaux de transition du groupe IVB (Ti, Zr, Hf), du groupe VB (V, Nb, Ta) et du groupe VIB (Cr, Mo, W) et (b) une source de carbone,
à chauffer le mélange à une vitesse comprise entre 100 K/s et 100 000 000 K/s dans une atmosphère essentiellement non oxydante jusqu'à une température élevée qui favorise thermodynamiquement une réduction carbothermique du mélange particulaire réactif; et
à maintenir le mélange particulaire à la température élevée pendant une durée de séjour suffisante pour convertir essentiellement le mélange en au moins un produit choisi parmi (i) un ou plusieurs carbures métalliques, (ii) un ou plusieurs précurseurs de carbures métalliques, (iii) un ou plusieurs carbures en solution solide, et (iv) un ou plusieurs précurseurs de carbures métalliques en solution solide.

2. Procédé selon la revendication 1, dans lequel le produit est un précurseur du carbure de tungstène et la température élevée est comprise entre 1673 K (1400°C) et 2673 K (2400°C).

3. Procédé selon l'une des revendications 1 ou 2, dans lequel la durée de séjour est de 0,1 seconde à 30 minutes.

4. Procédé selon la revendication 1, dans lequel ladite durée de séjour est de 0,2 seconde à 30 secondes.

5. Procédé selon l'une des revendications 1 à 3, dans lequel la vitesse de chauffage est comprise entre 100 et 10 000 K/s.

6. Procédé selon l'une des revendications 1 à 4, dans lequel la vitesse de chauffage est comprise entre 10 000 et 100 000 000 K/s.

7. Procédé selon l'une des revendications précédentes, dans lequel le produit possède une granulométrie de 0,01 à 0,2 µm.

8. Procédé selon l'une des revendications précédentes, dans lequel ledit produit est au moins un carbure métallique choisi parmi le carbure de titane, le carbure de zirconium, le carbure d'hafnium, le carbure de tantale, et le carbure de molybdène.

9. Procédé selon l'une des revendications 1 à 6, dans lequel le produit est au moins un carbure en solution solide choisi parmi le carbure de tungstène-titane, le carbure de molybdène-tantale, le carbure de titane-tantale, le carbure de tungstène-titane-tantale, le carbure d'hafnium-tantale, le carbure de titane-hafnium, le carbure de tantale-tungstène, le carbure de titane-tantale-hafnium, le carbure de tungstène-molybdène, et le carbure de tungstène-vanadium.

10. Procédé selon l'une des revendications 1 à 5, dans lequel le produit est un précurseur choisi parmi (ii) ou (iv) et le procédé comprend de plus une étape de finition dans laquelle une quantité de carbone suffisante pour convertir le précurseur en un produit fini est mélangée au précurseur pour former un mélange qui est alors chauffé à une température de finition et maintenu à cette température pendant une durée suffisante pour convertir le précurseur en un produit fini.

11. Procédé selon la revendication 10, dans lequel le précurseur est un précurseur de carbure de tungstène, un précurseur de carbure de tungstène-molybdène, un précurseur de carbure de tungstène-titane, ou un précurseur de carbure de tungstène-vanadium, la température de finition est de 1473 à 1673 K (1200 à 1400°C) et la durée à la température de finition est de 15 à 180 minutes.

12. Procédé selon l'une des revendications 10 ou 11, dans lequel le mélange est soumis à une action de mélange pendant la finition.

## Patentansprüche

1. Verfahren zur Herstellung eines teilchenförmigen Submikrometercarbids, umfassend:
rasches carbothermisches Reduzieren eines reaktiven, teichenförmigen Gemisches aus (a) mindestens einem Metalloxid, ausgewählt aus Oxiden von Übergangsmetallen der Gruppe IVB (Ti, Zr, Hf), Gruppe VB (V, Nb, Ta) und Gruppe VIB (Cr, Mo, W) und (b) einem Kohlenstoffausgangsmaterial,
durch Erhitzen des Gemisches mit einer Rate in einem Bereich von 100 K/sek. bis 100.000.000 K/sek. in einer im wesentlichen nicht oxidierenden Atmosphäre auf eine erhöhte Temperatur, die eine carbothermische Reduktion des reaktiven, teilchenförmigen Gemisches thermodynamisch begünstigt; und
Halten des teilchenförmigen Gemisches bei der erhöhten Temperatur für eine Verweilzeit, die ausreichend ist, um das Gemisch im wesentlichen in mindestens ein Produkt überzuführen, ausgewählt aus (i) einem oder mehreren Metallcarbiden, (ii) einem oder mehreren Metallcarbidvorläufern, (iii) einem oder mehreren Carbiden aus fester Lösung und (iv) einem oder mehreren Metallcarbidvorläufern aus fester Lösung.

2. Verfahren nach Anspruch 1, worin das Produkt ein Wolframcarbidvorläufer ist und die erhöhte Temperatur in einem Bereich von 1673 K (1400 °C) bis 2673 K (2400 °C) ist.

3. Verfahren nach Anspruch 1 oder 2, worin die Verweilzeit von 0,1 Sekunden bis 30 Minuten ist.

4. Verfahren nach Anspruch 1, worin die Verweilzeit von 0,1 Sekunden bis 30 Sekunden ist.

5. Verfahren nach einem der Ansprüche 1 bis 3, worin der Heizratenbereich von 100 bis 10.000 K/sek. ist.

6. Verfahren nach einem der Ansprüche 1 bis 4, worin der Heizratenbereich von 10.000 bis 100.000.000 K/sek. ist.

7. Verfahren nach einem der vorhergehenden Ansprüche, worin das Produkt eine Größe von 0,01 bis 0,2 Mikrometer hat.

8. Verfahren nach einem der vorhergehenden Ansprüche, worin das Produkt mindestens ein Metallcarbid ist, ausgewählt aus Titancarbid, Zirkoniumcarbid, Hafniumcarbid, Tantalcarbid und Molybdäncarbid.

9. Verfahren nach einem der Ansprüche 1 bis 6, worin das Produkt mindestens ein Carbid aus fester Lösung ist, ausgewählt aus Wolfram-Titan-Carbid, Molybdän-Tantal-Carbid, Titan-Tantal-Carbid, Wolfram-Titan-Tantal-Carbid, Hafnium-Tantal-Carbid, Titan-Hafnium-Carbid, Tantal-Wolfram-Carbid, Titan-Tantal-Hafnium-Carbid, Wolfram-Molybdän-Carbid und Wolfram-Vanadium-Carbid.

10. Verfahren nach einem der Ansprüche 1 bis 5, worin das Produkt ein Vörläufer ist, ausgewählt aus (ii) oder (iv) und das Verfahren weiterhin einen Nachbehandlungsschritt umfaßt, worin eine Kohlenstoffmenge, die ausreichend ist, um den Vorläufer in ein Fertigprodukt überzuführen, mit dem Vorläufer gemischt wird, um ein Gemisch zu bilden, das auf eine Nachbehandlungstemperatur erhitzt und bei dieser Temperatur für eine Zeitdauer gehalten wird, die zum Überführen des Vorläufers in ein Fertigprodukt ausreichend ist.

11. Verfahren nach Anspruch 10, worin der Vorläufer ein Wolframcarbidvorläufer, Wolfram-Molybdän-Carbidvorläufer, ein Wolfram-Titan-Carbidvorläufer oder ein Wolfram-Vanadium-Carbidvorläufer ist, die Nachbehandlungstemperatur von 1473 bis 1673 K (1200 bis 1400 °C) ist und die Zeit bei der Nachbehandlungstemperatur von 15 bis 180 Minuten ist.

12. Verfahren nach Anspruch 10 oder 11, worin das Gemisch während der Nachbehandlung einer Vermischung ausgesetzt wird.
